Europäisches Patentamt

European Patent Office

Office européen des brevets

(11) Veröffentlichungsnummer: **0 475 209 A2**

# (12) EUROPÄISCHE PATENTANMELDUNG

(21) Anmeldenummer: **91114559.7**

(22) Anmeldetag: **29.08.91**

(51) Int. Cl.5: **G06F 9/38**

(30) Priorität: **14.09.90 DE 4029242**

(43) Veröffentlichungstag der Anmeldung:
**18.03.92 Patentblatt 92/12**

(84) Benannte Vertragsstaaten:
**DE FR GB IT NL**

(71) Anmelder: **SIEMENS AKTIENGESELLSCHAFT**
**Wittelsbacherplatz 2**
**W-8000 München 2(DE)**

(72) Erfinder: **Wahr, Alfons-Josef, Dipl.-Ing.**
**Pucher Strasse 52**
**W-8080 Fürstenfeldbruck(DE)**

(54) **Anordnung zur Ermittlung von durch eine CPU eines Prozessors modifizierten Befehlen.**

(57) Bei der Modifikation von Befehlen in der CPU eines Prozessors, der eine Cacheanordnung enthält oder dessen CPU eine Pipelinestruktur aufweist, entstehen dann Probleme wenn der modifizierte Befehl in der Phase der Modifikation bis zu dessen Abspeicherung in einem weiteren Prozessorzyklus bereits wieder in die CPU geladen wird oder bereits in einen Befehlscache enthalten ist. Um dies zu verhindern, wird in einer Anordnung (SN) überprüft, ob die Schreibadressen (VD-ADR), unter der die Bearbeitungsergebnisse bei der Befehlsausführung abgespeichert werden, die Adressen von Befehlen in der Befehlscacheanordnung bzw. in der Pipeline sind. Ist dies der Fall, dann wird ein Treffersignal (SU) abgegeben, das dazu verwendet werden kann, die Weiterbearbeitung solange zu unterbrechen, bis der modifizierte Befehl in der Befehlscacheanordnung bzw. in der Pipeline enthalten ist.

FIG 1

EP 0 475 209 A2

Bei Rechenanlagen und bei in diesen Rechenanlagen verwendeten Maschinensprachen können im Befehlsrepertoire Befehle enthalten sein, in denen Konstanten enthalten sind. Diese Konstanten sind nicht durch (Register-) Variable ersetzbar. Wenn diese Konstanten geändert werden müssen, muß somit der Befehl modifiziert werden. Dabei entsteht das Problem, daß eine quasi parallele Ausführung von mehreren Aufträgen unter Verwendung dieses Befehles zu falschen Ergebnissen führen kann.

Bei einfachen Prozessorimplementierungen, die Befehl für Befehl hintereinander abwickeln und die kein Befehls-Cache enthalten, treten im allgemeinen keine Probleme auf. Bei Prozessoren, die nach dem Pipeline-Verfahren implementiert sind, oder Prozessoren, die getrennte Befehlshol- und Datenschreibwege haben oder die ein virtuelles bzw. reales Befehlscache beinhalten, sind jedoch große Probleme gegeben. Sie können nämlich den zu modifzierenden Befehl längst aus dem Arbeitsspeicher geholt haben, ja sogar teilweise abgearbeitet haben.

Die der Erfindung zugrundeliegende Aufgabe besteht darin, derartig modifizierte Befehle insbesondere bei Prozessoren festzustellen, die einen virtuellen Speicher oder eine Pipeline-Anordnung oder getrennte Befehlshol- und Datenschreibwege aufweisen. Diese Aufgabe wird durch eine Anordnung gemäß dem Anspruch 1 gelöst.

Mit der Vergleichsanordnung in der erfindungsgemäßen Anordnung wird somit festgestellt, ob die von der CPU abgegebenen Schreibadressen der Adresse eines Befehles entspricht. Ist dies der Fall, dann wird ein Treffersignal erzeugt, durch das z.B. veranlaßt werden kann, daß auf diesen Befehl erst dann wieder zugegriffen werden kann, wenn unter der Adresse der modifizierte Befehl eingespeichert ist. Zweckmäßig ist es dabei, daß während der Phase der Modifikation des Befehls bis zur Abspeicherung im Hauptspeicher bei einer folgenden Befehlsholphase auf diesen Befehl entweder solange nicht zugegriffen werden kann oder veranlaßt wird, daß der modifizierte Befehl der CPU zugeführt wird.

Wenn der Prozessor eine Befehlscacheanordnung enthält, die zwischen der CPU und dem Hauptspeicher geschaltet ist, dann muß erst ermittelt werden, ob der Befehl dort steht. Dazu ist es vorteilhaft, wenn die Vergleichsanordnung einen Komparator und einen Eintragsspeicher aufweist und der Eintragsspeicher ein teilweises Abbild des Eintragsspeichers der Befehlscacheanordnung ist. Für diesen Fall wird im Komparator die Schreibadresse mit dem Inhalt des Eintragsspeichers verglichen und bei Gleichheit das Treffersignal erzeugt.

Wenn die CPU eine Pipelinestruktur aufweist, dann wird überprüft, ob die Schreibadresse die Adresse eines Befehles in der Pipeline ist. Für diesen Fall ist es vorteilhaft, jeder Verarbeitungsstufe der Pipeline ein Befehlsadreßregister mit den zugehörigen Befehlszählerwert und einen Komparator zuzuordnen. Die Schreibadresse wird nunmehr den Komparatoren zugeführt, die überprüfen, ob in den Befehlsadreßregistern diese Adresse enthalten ist. Ist dies der Fall, dann wird das Treffersignal erzeugt.

Weiterbildungen der Erfindung ergeben sich aus den Unteransprüchen.

Anhand von Ausführungsbeispielen, die in den Figuren dargestellt sind, wird die Erfindung weiter erläutert. Es zeigen

Figur 1    ein Prinzipschaltbild eines Prozessors mit Cache,

Figur 2    eine Ausführung der erfindungsgemäßen Anordnung,

Figur 3    eine beispielhafte Pipelinestruktur einer CPU,

Figur 4    die erfindungsgemäße Weiterbildung der Pipelinestruktur mit erfindungsgemäßer Anordnung.

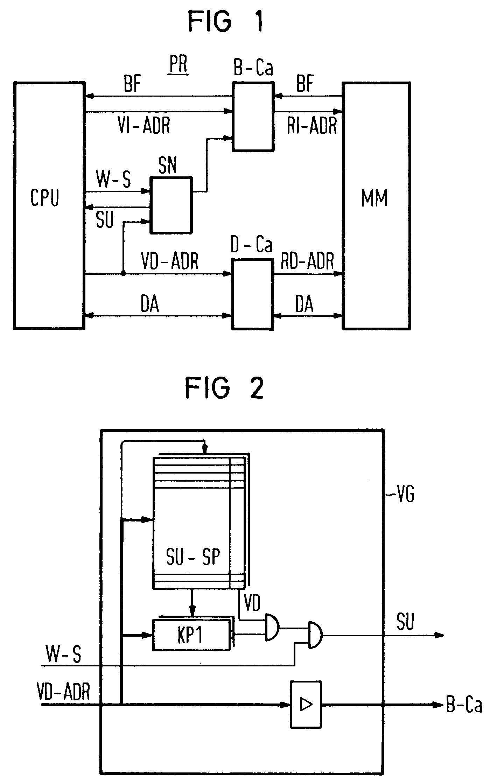

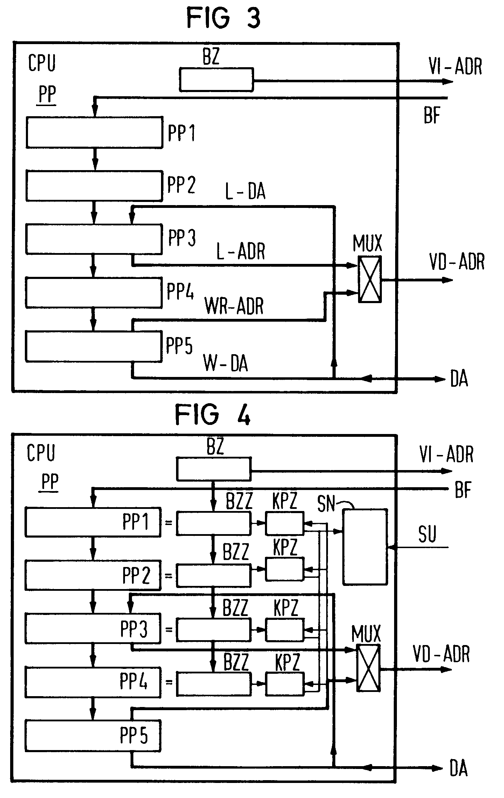

Figur 1 zeigt als Beispiel einen Prozessor PR, der eine Datenverarbeitungseinheit CPU und einen Hauptspeicher MM aufweist. Zwischen Hauptspeicher MM und CPU ist im Ausführungsbeispiel eine Befehlscacheanordnung B-CA und eine Datencacheanordnung D-CA angeordnet. Die Cacheanordnung für Befehle (B-Ca) bzw. Daten (D-Ca) kann für den Befehls- bzw. Datenweg eine Adreßumsetzungseinheit MMU (memory management unit) zur Umsetzung der virtuellen Adressen (VI-ADR, bzw. VD-ADR) in reale Adressen (RI-ADR bzw. RD-ADR) und mindestens ein Cache aufweisen. Es können auch zwei Caches enthalten sein, eines für den virtuellen Pfad und eines für den reelen Pfad. In der CPU kann zur Verarbeitung von Befehlen zusätzlich eine Pipelinestruktur enthalten sein, die z.B. gemäß Figur 3 ausgeführt sein kann. Der Aufbau eines derartigen Prozessors und dessen Betriebsweise ist bekannt und muß nicht weiter erläutert werden. Wenn der Prozessor einen Befehl BF bearbeiten will, dann gibt er die Adresse VI-ADR an die Befehlscacheanordnung B-CA ab. Steht der Befehl in der Befehlscacheanordnung B-CA, dann wird er in die CPU übertragen. Steht er nicht in der Befehlscacheanordnung B-CA, dann muß auf den Hauptspeicher MM zugegriffen werden. Die Befehle, die in der Befehlscacheanordnung B-CA stehen, sind mit einer Adresse versehen, die im Eintragsspeicher der Befehlscacheanordnung enthalten ist.

Die Befehle BF werden in der CPU ausgeführt, was dazu führen kann, daß Daten zur Bearbeitung notwendig sind. Dazu wird eine Datenadresse VD-ADR an die Datencacheanordnung D-CA abgegeben, um festzustellen, ob die gewünschten Daten in der Datencacheanordnung stehen. Ist dies der Fall, dann werden die Daten zur CPU übertragen. Ist es dagegen nicht der Fall, dann müssen die Daten aus dem Hauptspreicherr MM geholt werden. Die Bearbeitung des Befehles in der CPU kann mit Hilfe einer Pipelinestruktur erfolgen, wie sie Figur 3 zu entnehmen ist. In einem Befehlszähler BZ stehen auf übliche Art und Weise die zu bearbeitenden Befehle. Der Befehlszähler gibt demgemäß die Adresse VI-ADR ab. Der damit adressierte Befehl BF wird der Pipeline PP zugeführt, die im Ausführungsbeispiel aus einer Registerstufe PP1, einer ersten Befehlsdecodierstufe PP2, einer zweiten Befehlsdecodierstufe PP3, einer Befehlsbearbeitungsstufe PP4 und einer Stufe PP5 besteht, die das Ergebnis der Verarbeitung enthält.

Ein zu bearbeitender Befehl BF wird der Registerstufe PP1 zugeführt, gelangt von dort in die erste Befehlsdecodierung PP2, die eine Vordecodierung durchführt. Anschließend erfolgt die endgültige Decodierung des Befehles in der Befehlsdecodierungsstufe PP3. Dazu kann eine Leseadresse L-ADR ausgegeben werden, die als Datenadresse VD-ADR zur Datencacheanordnung D-CA übertragen wird. Die darauf gelieferten DA können ebenfalls der Befehlsdecodierungsstufe PP3 zugeführt werden, sie sind in Figur 3 mit L-DA bezeichnet.

Die Stufe PP4 führt die Befehle aus eventuell unter Verwendung der gelesenen Daten DA und speichert das Ergebnis in der Stufe PP5 ab. Die Stufe PP5 gibt dabei die Schreibdaten W-DA als Daten DA zur Datencacheanordnung D-CA und erzeugt zudem die Schreibadresse WR-ADR, die als Adresse VD-ADR der Datencacheanordnung D-CA zugeleitet wird. Die Auswahl zwischen Leseadresse L-ADR und Schreibadresse WR-ADR kann mit Hilfe eines Multiplexers MUX erfolgen. Die Arbeitsweise einer CPU mit Pipelinestruktur ist ebenfalls bekannt und braucht nicht ausführlicher erläutert zu werden.

Um festzustellen, ob in der CPU Befehle modifiziert werden, und um zu verhindern, daß auf einen zu modifizierenden Befehl zugegriffen wird, bevor der modifizierte Befehl abgespeichert ist, wird eine Anordnung SN verwendet, die auch als Snooping-Anordnung bezeichnet wird. Die Anordnung SN ist derart im Prozessor PR angeordnet, daß sie von der CPU die Schreibadresse VD-ADR plus dem Schreibsignal W-S erhält. Die Schreibadresse wird mit den Adressen der in der Befehlscacheanordnung B-CA enthaltenen Befehlen verglichen. Bei positivem Vergleich steht der modifizierte Befehl in unmodifizierter Form in der Befehlscacheanordnung B-CA. Deswegen gibt die Anordnung SN ein Treffersignal SU ab, das der CPU zugeführt wird, und Funktionen auslösen kann, mit der entweder der Bearbeittungsvorgang unterbrochen wird (interrupt) oder die Befehlscacheanordnung auf den neuesten Stand gebracht wird, also der modifizierte Befehl unter der Adresse in der Befehlscacheanordnung B-CA abgespeichert wird oder der Eintrag im Eintragsspeicher ungültig gesetzt wird.

Eine mögliche Ausführung der Anordnung SN kann der Figur 2 entnommen werden. Diese enthält eine Vergleichsanordnung VG mit einem Komparator KP1 und einem Eintragsspeicher SU-SP, in dem ein Auszug des Eintragsspeichers der Befehlscacheanordnung enthalten ist. In dem Speicher SU-SP sind z.B. Adressen der Befehle gespeichert, die in der Befehlscacheanordnung gerade enthalten sind. Durch Vergleich der Adresse VD-ADR von der CPU mit dem Inhalt des Eintragsspeichers SU-SP wird festgestellt, ob die Adresse VD-ADR eine Adresse ist, die einem Befehl in der Befehlscacheanordnung zugeordnet ist. Ist dies der Fall, dann wird vom Komparator KP1 das Treffersignal SU erzeugt, und zwar zu dem Zeitpunkt, indem das Schreibsignal W-S auftritt. Das Treffersignal SU kann dazu verwendet werden, um die Datenadresse VD-ADR als Adresse der Befehlscacheanordnung B-CA zu verwenden, um dort den modifizierten Befehl einzuspeichern oder den Eintrag in der Befehlscacheanordnung ungültig zu setzen. Gleichzeitig kann der Eintragsspeicher SU-SP ergänzt werden oder der Eintrag VD ungültig gesetzt werden. Das Treffersignal kann aber auch dazu verwendet werden, um den Ablauf zu unterbrechen, um über die Betriebssystem-Software den Unterbrechungsgrund festzustellen und die Konflikte auszuräumen.

Wird durch die Anordnung SN kein Treffersignal SU erzeugt, dann steht der modifizierte Befehl im Hauptspeicher MM, so daß weitere Maßnahmen nicht erforderlich sind.

Bei einer CPU mit Pipelinestruktur gemäß Figur 3 ist es möglich, daß der modifizierte Befehl bereits in der Pipeline PP steht. Eine Verarbeitung des Befehls würde dann dazu führen, daß nicht vom modifizierten Befehl ausgegangen wird, sondern vom Befehl vor dessen Modifizierung, mit der Folge, daß das Ergebnis der Ausführung des Befehles fehlerhaft wäre. Um dies zu verhindern, kann die CPU, und zwar deren Pipelinestruktur, erweitert werden, sowie es in Figur 4 gezeigt ist. Zu jeder Stufe der Pipeline wird ein zusätzliches Befehlsadreß-Register BZZ und ein zusätzlicher Komparator KPZ zugeordnet. Die Adresse des Befehles, der in der Stufe enthalten ist, wird dann jeweils in das zugeordnete Befehlsadreßregister BZZ abgespeichert. Der Befehlzähler-Registerwert wird ursprünglich aus dem Befehlszähler BZ geliefert und in das der ersten Stufe PP1 zugeordnete Befehlsadreß-Register BZZ eingespeichert. In Abhängigkeit des Durchlaufs des Befehls durch die Pipeline läuft dann auch der zugeordnete Befehl durch das Befehlsadreß-Register BZZ. Durch Vergleich der Inhalte der Befehlsadreß-Register BZZ mit der Schreibadresse, die von der Stufe PP5 abgegeben wird, und die in den zusätzlichen Komparatoren KPZ durchgeführt wird, kann festgestellt werden, ob ein Befehl modifiziert worden ist. Die entsprechenden zusätzlichen Komparatoren KPZ geben dann das Treffersignal ab, das dazu verwendet werden kann, um die weitere Befehlsbearbeitung zu unterbrechen, um mit Hilfe des Betriebssystems eine Korrektur durchzuführen. Diese könnte darin bestehen, den modifizierten Befehl in die entsprechende Stufe der Pipeline PP einzuspeichern, bzw. den ganzen bisherigen Bearbeitungsvorgang zurückzusetzen.

Die erfindungsgemäße Anordnung ermöglicht es somit, festzustellen, ob bei der Ausführung eines Befehls ein Befehl modifiziert wird. Damit wird die Möglichkeit gegeben, bei Prozessoren mit Cacheanordnung oder Pipelinestruktur zu verhindern, daß ein modifizierter Befehl vor seiner Modifikation verarbeitet wird. Das bei Feststellung eines modifizierten Befehls erzeugte Treffersignal kann Funktionen auslösen, die üblicher Art sind, z.B. kann die Befehlsbearbeitung unterbrochen werden und mit Hilfe des Betriebssystems dafür gesorgt werden, daß der modifizierte Befehl in die Befehlspipeline bzw. in die Cacheanordnung gelangt oder es ist möglich, durch Hardware-Maßnahmen den modifizierten Befehl in die Befehlscacheanordnung einzuspeichern oder den Eintrag ungültig zu setzen.

**Patentansprüche**

1. Anordnung zur Ermittlung von durch eine CPU eines Prozessors (PR) modifizierten Befehlen eines in einem Hauptspeicher (MM) gespeicherten Programmes mit einer Vergleichsanordnung (VG), die feststellt, ob die von der CPU abgegebenen Schreibadressen eine Adresse eines Befehles ist und für diesen Fall ein Treffersignal (SU) abgibt.

2. Anordnung nach Anspruch 1 für einen Prozessor (PR) mit einer Befehlscacheanordnung (B-CA) zwischen CPU und Hauptspeicher (MM), die überprüft, ob die Schreibadresse (VD-ADR) eine Adresse eines Befehls in der Befehlscacheanordnung (B-CA) ist.

3. Anordnung nach Anspruch 2, bei der die Vergleichsanordnung (VG) einen Komparator (KP1) und einen Eintragsspeicher (SU-SP) aufweist und bei der der Eintragsspeicher ein teilweises Abbild des Eintragsspeichers in der Befehlscacheanordnung (B-CA) ist und bei der der Komparator (KP1) den Inhalt des Eintragsspeichers (SU-SP) mit der Schreibadresse (VD-ADR) vergleicht.

4. Anordnung nach Anspruch 1 für einen Prozessor (PR) mit einer CPU, die eine Pipelinestruktur aufweist, die überprüft, ob die Schreibadresse (VD-ADR) die Adresse eines Befehls in der Pipeline (PP) ist.

5. Anordnung nach Anspruch 4 mit einem zusätzlichen Befehlsadreß-Register (BZZ) pro Verarbeitungsstufe in der Pipeline, einem zusätzlichen Komparator (KPZ) pro zusätzlichen Befehlsadreß-Register (BZZ), bei der im zusätzlichen Befehlsadreß-Register (BZZ) die Adresse des Befehls steht, der in der zugeordneten Stufe der Pipeline bearbeitet wird und bei der im zusätzlichen zugeordneten Komparator (KPZ) diese Adresse mit der Schreibadresse (VD-ADR) verglichen wird und bei Gleichheit ein Treffersignal (SU) erzeugt wird.

## FIG 1

## FIG 2

## FIG 3

## FIG 4